# EUROPÄISCHE PATENTSCHRIFT

(11) **EP 0 987 094 B1**
(45) Veröffentlichungstag und Bekanntmachung des Hinweises auf die Patenterteilung: **10.12.2003**
(21) Anmeldenummer: 99810784.1
(22) Anmeldetag: 01.09.1999
(51) Int. Cl.: B29C 67/00, B29C 51/08, B29C 51/14, B29C 51/04

(54) **Verfahren zum Herstellen von Verpackungen**
Method for formation of packages
Dispositif pour réaliser des emballages

(30) Priorität: 16.09.1998 CH 188998
(43) Veröffentlichungstag der Anmeldung: 22.03.2000
(73) Patentinhaber: Alcan Technology & Management AG, 8212 Neuhausen am Rheinfall (CH)
(72) Erfinder: Zeiter, Patrik, 8044 Zürich (CH); Oster, Heinz, 8245 Feuerthalen (CH)

(56) Entgegenhaltungen:
- EP-A- 0 799 143
- DE-A- 4 437 986

## Beschreibung

Vorliegende Erfindung betrifft eine Verfahren zum Herstellen von kaltverformten Formpackungen aus einem Metall-Kunststoff-Verbund, wobei der Verbund zwischen einem Niederhalter und einer Matrize festgehalten wird und die Matrize wenigstens eine Gesenköffnung aufweist und in die Gesenköffnungen der Matrize ein Stempel vorgetrieben wird und dabei der Verbund zu der Formpackung mit einer oder mehreren Vertiefungen verformt wird, die Matrize und der Niederhalter einen einander gegenüberliegenden Randbereich aufweisen und die Matrize innerhalb des Randbereiches einen Schulterbereich, welcher die Gesenköffnung oder die Gesenköffnungen umgibt, aufweist und die Oberfläche des Schulterbereiches tiefer liegt als die Oberfläche des Randbereiches der Matrize. Ferner betrifft vorliegende Erfindung auch eine Vorrichtung zur Ausführung des Verfahrens von kaltverformten Formpackungen aus einem Metall-Kunststoff-Verbund und kaltverformte Formpackungen.

Es ist bekannt, Formpackungen, wie z.B. die Bodenteile von Blisterpackungen, auch Durchdrückpackungen genannt, oder andere Verpackungsbehälter, beispielsweise durch Tiefziehen, Streckziehen oder Thermoformen herzustellen. Die Formpackungen können aus thermoplastischen Kunststoffen oder aus Folienverbunden oder Laminaten, wie z.B. Aluminiumfolien mit auflaminierten Kunststoffolien oder aufextrudierten Schichten aus thermoplastischen Kunststoffen hergestellt werden.

Werden die Formpackungen aus metallfolienhaltigen Laminaten gefertigt, kann dies mit Umformwerkzeugen aus einem Stempel, einer Matrize und einem Niederhalter erfolgen. Während der Umformung ist das Laminat zwischen der Matrize und dem Niederhalter klemmend festgelegt und anschliessend wird der Stempel gegen das Laminat bewegt. Der Stempel greift mit zunehmender Absenkung in die Gesenköffnungen der Matrize und verformt dabei das Laminat. Aus dem planen Laminat wird ein Formteil mit einer oder einer Mehrzahl von Vertiefungen geformt. Die Vertiefungen sind von Schultern umgeben und die Schultern entsprechen dem Laminat in der ursprünglichen Planlage. Für die Verformung zu einer Formpackung kann nur der Teil des Laminates, der im Bereich der Gesenköffnung liegt, fliessen oder gedehnt werden. Damit das Laminat, und dabei besonders das metallfolienhaltige Laminat, ohne Risse und Poren umgeformt werden kann, muss ein genügend grosser seitlicher Abstand zwischen Stempel und Gesenköffnung eingehalten werden. Mit diesem Verfahren erzielt man bei einer Kaltverformung eines metallfolienhaltigen Laminates nur eine geringe Steigung der Seitenwandungen der Vertiefungen. Dies führt zu schlechten Tiefungsverhältnissen, d.h. zu Vertiefungen geringer Höhe bei grossem Durchmesser, und somit zu grossen Packungen im Verhältnis zum Füllgut.

Eine Möglichkeit, mehr verformbares Laminat zur Verfügung zu haben, um stärkere Seitenwandsteigungen zu erzielen, kann darin liegen, die Niederhaltekraft zu verkleinern und nach der Tiefzieh-Technologie zu arbeiten. Diese Technologie ist für metallfolienhaltige Laminate, beispielsweise bei Blisterpackungen, nicht anwendbar, da im Randbereich oder auch im Schulterbereich Falten entstehen würden. Der Randbereich und gegebenenfalls der Schulterbereich von Formpackungen wird jedoch in der Regel zum Aufsiegeln eines Dekkels herangezogen. Mit Falten würde der Rand und die Schultern des Formteils unsiegelbar.

Die europäischen Patentanmeldung EP 0 779 143 A1 beschreibt ein Verfahren zur Erzeugung solcher Formpackungen. Dabei wird ein Metall-Kunststoffverbund zwischen einem Niederhalter und einer Matrize mit einer oder mehreren Gesenköffnungen festgehalten, während zwei oder mehrere Stempel den Verbund in die Gesenköffnungen vortreibt und dabei diesen in eine Formpackung mit Vertiefungen verformt. Das beschriebene Verfahren beinhaltet dabei zwei Schritte. Im ersten Schritt wird ein Stempel verwendet, der an verformungswirksamen Oberflächenstellen eine hohe Reibung besitzt. Damit wird in einem oder mehreren Teilschritten der Verbund vorverformt. Im zweiten Schritt wird ein zweiter Stempel zur weiteren Verformung herangezogen. Dieser besitzt an verformungswirksamen Oberflächenstellen eine niedrigere Reibung. Mit ihm wird der Verbund in einem oder mehren Teilschritten zu seiner endgültigen Form verformt.

Aufgabe vorliegender Erfindung ist es, ein Verfahren bereitzustellen, welches die Erzeugung von faltenfreien Formpackungen, resp. Formteilen, aus metallfolienhaltigen Verbunden durch Kaltverformen ermöglicht und dabei betreffend dem Mass der Ausformungen und Seitenwandsteigung eine Verbesserung gegenüber dem Stand der Technik darstellt.

Erfindungsgemäss wird dies durch ein Verfahren gemäss Anspruch 1 erreicht.

Die Reibung kann ausgedrückt werden durch die dimensionslosen Zahlen nach der Vorschrift BS 2782 Methode 311 A. Die Reibung der Stempel, resp. der verformungswirksamen Oberfläche der Stempel, beträgt dabei von 0,05 bis 2,1. Z.B. weisen der oder die ersten und der oder die zweiten Stempel für den ersten und den zweiten Verformungsschritt, zumindest an den verformungswirksamen Oberflächen, eine unterschiedliche Reibung im angegebenen Bereich oder die Stempel weisen alle dieselbe Reibung auf.

Der oder die ersten Stempel können mit verformungswirksamen Oberflächen unterschiedlicher Geometrie gegenüber dem oder den zweiten Stempeln ausgestattet sein.

Gemäss einer bevorzugten Ausführungsform werden der erste Stempel oder die ersten Stempel in einem ersten Schritt bis 90 %, zweckmässig bis zu 70 % und vorteilhaft bis zu 50 % der endgültigen Tiefe der Vertiefungen vorgetrieben und anschliessend werden in einem zweiten Schritt der oder die gleichen ersten Stempel oder ein zweiter Stempel oder zweite Stempel auf 100 % bis 115 % und vorteilhaft auf 103 % bis 110 % der endgültigen Tiefe der Vertiefungen vorgetrieben.

Der erste, wie der zweite Schritt, können - unabhängig voneinander - in Teilschritte aufgeteilt werden mit zwei oder mehreren Stempelhüben mit den jeweils gleichen oder unterschiedlichen Stempeln.

In vorliegendem Verfahren werden vorteilhaft die verschiedenen Stempel nacheinander eingesetzt und schrittweise wird über eine Vorverformung bis zur maximalen Verformungstiefe jeder Stempel gleich bis tiefer als der vorhergegangene Stempel in die Gesenköffnung abgesenkt. Da eine Rückfederung des Metall-Kunststoff-Verbundes zu beobachten ist, muss wenigstens der letzte Verformungsschritt vorteilhaft über 100% der angestrebten Verformungstiefe hinaus geführt werden.

Zweckmässig weisen die bei dem ersten Schritt angewendeten Stempel mit einer verformungswirksamen Oberfläche der Reibung, von 0,05 bis 2,1, eine zylindrische Form, Kegelstumpfform, Pyramidenstumpfform oder eine Tonnenform auf. Die beim zweiten Schritt angewendeten Stempel weisen z.B. eine Kegelform, eine Pyramidenform, eine Kegelstumpfform, eine Pyramidenstumpfform, eine Kugelsegmentform oder Kalottenform auf. Die Stempel für den ersten Schritt weisen insbesondere senkrechte oder steile Seitenwände auf und die Kante oder der Rand zum Stempelboden hat einen kleinen Radius. Die Stempel für den zweiten Schritt, mit einer verformungswirksamen Oberfläche ebenfalls der Reibung von 0,05 bis 2,1, kann senkrechte oder auch abgeschrägte Seitenwände aufweisen und der Übergang zum Stempelboden kann gerundet sein oder eine rundliche Form aufweisen. In vorliegendem Verfahren weist der oder die Stempel und dabei insbesondere die ersten Stempel für den ersten Verformungsschritt, zwischen Stempelboden und Stempelseitenwand einen Kantenradius R von beispielsweise 0,3 mm bis 1,5 mm, vorzugsweise von 0,5 mm bis 1,2 mm, auf. Es hat sich ebenfalls als nützlich erwiesen, die Stempelgeometrien der einzelnen, aufeinanderfolgenden Stempel an den verformungswirksamen Oberflächenstellen unterschiedlich zu gestalten. Als günstige Ausführungsform hat es sich erwiesen, die Masszahl des Kantenradius R zwischen Stempelboden und Stempelseitenwand jeweils vom ersten zum zweiten Stempel graduell zu erhöhen, d.h. die Kante mehr abzurunden. Vorzugsweise kann anstelle eines Kantenradius R auch ein mehrstufiger, kegel- oder kegelstumpfförmig ausgebildeter Übergang vorgesehen sein.

Erfinderisch ist die Anwendung eines ersten Stempels für den ersten Verformungsschritt mit einem Kantenradius R zwischen Stempelboden und Stempelseitenwand von 0,1 mm bis 5,0 mm, vorzugsweise von 0,5 mm bis 5,0 mm und einem zweiten Stempel für den zweiten Verformungsschritt mit einem mehrstufigen kegel- oder kegelstumpfförmig ausgebildeten Übergang von Stempelseitenwand zu Stempelboden.

Das erfindungsgemässe Verfahren kann beispielsweise mit einer Matrize und Niederhalter und einem, zwei oder mehreren Stempel, die nacheinander in die Gesenköffnungen einer Matrize abgesenkt und wieder angehoben werden, ausgeführt werden. Die ersten und zweiten Stempel können an ihren verformungswirksamen Oberflächen mit der gleichen Reibung oder einer unterschiedlichen Reibung, jeweils im oben angegebenen Bereich, aufweisen. Für eine Vorverformung wird z.B. ein erster Stempel mit einer verformungswirksamen Oberfläche einer Reibung von 0,05 bis 2,1 für den ersten Schritt zur Vorverformung eingesetzt, dann wird dieser Stempel zurückgezogen und als zweiten Schritt führt derselbe Stempel in der gleichen Matrize die Endverformung durch. Für eine Vorverformung kann z.B. auch ein erster Stempel mit einer verformungswirksamen Oberfläche einer Reibung von 0,05 bis 2,1 eingesetzt werden, dann wird dieser Stempel zurückgezogen und ein zweiter Stempel mit einer verformungswirksamen Oberfläche ebenfalls der Reibung von 0,05 bis 2,1 führt in der gleichen Matrize oder einer zweiten Matrize nach dem Verschieben des vorverformten Verbundes die Endverformung durch. Es können auch drei und mehr Stempel mit einer verformungswirksamen Oberfläche einer Reibung von 0,05 bis 2,1 und mit gleichen oder mit zwei Oberflächengeometrien oder graduell gestuft sich ändernde Geometrien eingesetzt werden.

Das Verfahren kann in anderer Ausführungsform derart ausgeführt werden, dass die Stempel koaxial oder teleskopisch ineinander angeordnet sind. Ein erster Stempel mit einer verformungswirksamen Oberfläche niedriger Reibung, in der Draufsicht in Ringform, kann durch absenken in die Matrize eine Vorverformung des Verbundmaterials bewirken. Der erste Stempel kann in seiner Vorverformungsposition belassen werden und ein zweiter zylinderförmiger Stempel, der teleskopisch im ersten ringförmigen Stempel gleitet und eine verformungswirksame Oberfläche niedriger Reibung aufweist, wird anschliessend abgesenkt und bewirkt die Endverformung des Verbundmaterials. Derartige Stempel können auch aus zwei oder mehreren ringförmigen und einem innersten zylindrischen Stempel, die alle teleskopisch ineinander gleiten, gebildet werden. Die Reibungen der verformungswirksamen Oberflächen der einzelnen Stempel können im angegebenen Bereich liegen oder den gleichen numerischen Betrag aufweisen.

Das Verfahren kann in weiterer Ausführungsform derart ausgeführt werden, dass mehrere, insbesondere zwei Matrizen mit ihren Niederhaltern nacheinander angeordnet sind und jede der Matrizen einen Stempel zugeordnet hat. Taktweise wird das Verbundmaterial in einem ersten Schritt in der ersten Matrize vorverformt, der Vorformling verschoben und in einem zweiten Schritt in der zweiten Matrize endverformt. Es ist auch möglich, die Vorverformung in zwei oder mehrere Schritte oder Stufen und die Endverformung in zwei oder mehrere Schritte oder Stufen aufzuteilen und somit ein insgesamt Drei-, Vier- usw. schritt- oder stufenverfahren anzuwenden.

Die aus der Fläche des Verbundes geformten Vertiefungen können napfartig, schalenartig, kalottenförmig, tonnenförmig, zylindrisch usw. sein. In der Draufsicht können die Vertiefungen rund, oval oder polygonal, wie zwei-, drei-, vier- oder mehreckig, sein. Bevorzugt sind Vertiefungen mit steilen bis senkrechten, möglichst geraden Seitenwänden und möglichst wenig gewölbtem Boden. Die Vertiefungen sind von einer, in der Regel ebenen, Schulterfläche aus dem Verbund umgeben.

In bevorzugter Ausführungsform der Matrize, liegt die Oberfläche des Schulterbereiches der Matrize 0,05 bis 2 mm, vorzugsweise 0,15 bis 0,3 mm, tiefer als die Oberfläche des Randbereiches der Matrize.

Die Vorrichtung nach vorliegender Erfindung kann eine Matrize mit einer Gesenköffnung oder mit mehreren Gesenköffnungen enthalten.

Zweckmässig weist die Vorrichtung, und dabei insbesondere die Matrize, 1 bis 200, vorzugsweise 8 bis 40 Gesenköffnungen auf. Die Verformung des Metall-Kunststoff-Verbundes erfolgt mittels wenigstens eines Stempels. Der Stempel kann als solcher in eine Gesenköffnung dringen. Weist die Matrize mehrere Gesenköffnungen auf, kann der Stempel einen Träger oder Tragplatte oder Halterplatte oder dergl. aufweisen und daran befestigt eine den Gesenköffnungen entsprechende Anzahl Stempelkörper. Der Stempel resp. die Stempelkörper sind derart dimensioniert, dass sie unter Verformung des Metall-Kunststoff-Verbundes in die Gesenköffnungen eindringen können. Vorteilhaft ist der Durchmesser des Stempels, resp. der Stempelkörper, 3 bis 35 %, vorzugsweise 1 bis 15 % und insbesondere 5 bis 10 %, geringer als der Durchmesser der jeweiligen Gesenköffnung. Unter Durchmesser des Stempels resp. Stempelkörpers oder der Gesenköffnung wird im Falle eines nicht kreisrunden Querschnittes, wie eines konvexen Querschnittes, z.B. elliptisch, oval, polygonal, rechteckig, trapezförmig, rhomboid usw., der kleinste Durchmesser verstanden.

Die Wände der Gesenköffnungen in der Matrize stehen in der Regel in einem Winkel von 90° zur Oberfläche des Schulterbereiches. Die Kante zwischen der Wand der Gesenköffnung und der Oberfläche des Schulterbereiches kann gerundet sein, mit einem Radius von beispielsweise 0,1 bis 10 mm und zweckmässig von 0,1 bis 1 mm.

In anderer bevorzugter Ausführungsform weisen die Randbereiche des Niederhalters und der Matrize eine Breite jeweils von 1 bis 100 mm, zweckmässig 2 bis 30 und vorzugsweise von 3 bis 20 mm auf.

Die Matrize weist den Randbereich und innerhalb des Randbereiches den Schulterbereich auf. Die Gesenköffnungen sind innerhalb des Schulterbereiches insbesondere symmetrisch oder auch unsymmetrisch angeordnet und der Schulterbereich bildet demnach Stege aus, welche die Gesenköffnungen umgeben.

Der Schulterbereich der Matrize weist beispielsweise Abstände zwischen dem Randbereich der Matrize und den Gesenköffnungen und zwischen den einzelnen Gesenköffnungen von 1 bis 50 mm und vorzugsweise 5 bis 25 mm, auf.

Der Randbereich des Niederhalters oder der Randbereich der Matrize oder die Randbereiche des Niederhalters und der Matrize können teil- oder vollflächig ein Rauhigkeitsmuster aufweisen. Typische Rauhigkeitsmuster sind Riffelungen, Waffelmuster, Warzenmuster, Wabenmuster, Noppen, Verzahnungen, aufgerauhte Oberflächen usw. Anstelle oder zusammen mit dem Rauhigkeitsmuster können auch umlaufende Leisten, beispielsweise aus einem elastischen Material, wie Gummi und dergl., eingesetzt werden.

Vorteilhaft liegen in Arbeitsstellung die Randbereiche des Niederhalters und der Matrize über den Metall-Kunststoff-Verbund einander an und halten, gegebenenfalls verstärkt durch ein Rauhigkeitsmuster, den Verbund unverstreckbar fest. Der Schulterbereich der Matrize liegt zweckmässig in Abstand zu den gegenüberliegenden Niederhalterteilen und in diesem Bereich ist der Metall-Kunststoff-Verbund nicht in Berührung mit dem Niederhalter und der Metall-Kunststoff-Verbund kann sich nach Massgabe der Absenkung des Stempels verstrecken oder fliessen.

Die Schulterbereiche der Matrize können ganz oder teilweise mit einer zumindest an der Oberfläche angeordneten Schicht niedriger Reibung bedeckt sein. Mit niedriger Reibung wird in vorliegendem Falle eine Reibung nach der Vorschrift BS 2782 Methode 311 A mit Werten von beispielsweise 0,05 bis 2,1 (dimensionslose Zahl) umfasst. Die Schicht niedriger Reibung kann beispielsweise Kunststoffe, wie Polytetrafluorethylen, Polyoxymethylen (Polyacetal, POM), Polyethylen oder Polyethylenterephthalat enthalten oder daraus bestehen. Die Schicht niedriger Reibung kann auch zwei oder mehrere der beispielhaft genannten Kunststoffe in Mischung oder einen oder mehrere der Kunststoffe im Gemisch mit zusätzlichen in verteilter Form vorliegenden Hartstoffen, wie Gläser in Kugelform, aufweisen. Anstelle der Kunststoffe können andere Werkstoffe als Schicht mit niedriger Reibung in Frage kommen. Dies sind beispielsweise Metalle, wie Aluminium oder Chromstahl, insbesondere auch mit polierten Oberflächen. Weitere Oberflächenschichten mit niedriger Reibung, wie keramische Schichten oder graphit-, bornitrid- oder molybdändisulfidhaltige Schichten sind anwendbar. Die Schicht mit niedriger Reibung auf den Schulterbereichen der Matrize ist bezüglich ihrer Dicke unkritisch, da nur die Oberfläche wirksam ist. In der industriellen Anwendung ist die Schicht grossen Reibbeanspruchungen ausgesetzt und eine Schichtdicke, welchen einen Abtrag oder Verschleiss zulässt, ist vorzuziehen. Daher kann die Dicke der Schicht bei der Anwendung der genannten Kunststoffe beispielsweise von 0,5 bis 20 mm betragen. Die Schicht aus Kunststoff kann beispielsweise als vorgeformte Einlage in den abgetieften Schulterbereich der Matrize eingelegt werden oder kann durch sprühen, streichen oder rakeln oder durch ein anderes Auftragsverfahren aufgebracht werden. Die Kunststoffe können auch in einer Matrix aus anderen Stoffen, wie Keramik oder Metall aufgenommen sein. Metallschichten können beispielsweise auf der Matrize mit chemischen oder physikalischen Verfahren aufgebracht werden, wie durch galvanische oder elektrolytische Abscheidung, plattieren oder aufdampfen aus dem Vakuum, oder die Matrize kann aus den entsprechenden Metallen zumindest teilweise bestehen.

Stempel mit einer verformungswirksamen Oberfläche niedriger Reibung sind in der Regel aus einer Haltevorrichtung, wie einer Halterplatte, und einer Anzahl Stempelkörper aufgebaut. Die Anzahl der Stempelkörper entspricht vorteilhaft der Anzahl der Gesenköffnungen. Die Stempelkörper greifen in die entsprechenden Öffnungen im Niederhalter und in die Gesenköffnungen der Matrize.

Beim Stempel mit einer verformungswirksamen Oberfläche niedriger Reibung weist zweckmässig wenigstens die verformungswirksame Oberfläche, d.h. die Oberfläche des Stempels, resp. der Stempelkörper, die mit dem Verbund in Berührung kommt, eine niedrige Reibung auf. Mit niedriger Reibung wird in vorliegendem Falle eine Reibung nach der Vorschrift BS 2782 Methode 311 A mit Werten von beispielsweise 0,05 oder darunter bis 2,1 (dimensionslose Zahl) umfasst. Bei den Stempeln kann zumindest die verformungswirksamen Oberfläche niedriger Reibung beispielsweise Metalle, wie Stahl, oder Kunststoffe, wie Polytetrafluorethylen, Polyoxymethylen, Polyacetal (POM), Polyethylenterephthalat, Polyethylen, Gummi, Hartgummi oder Kautschuke, einschliesslich Acrylpolymerisaten, enthalten oder aus diesen Stoffen bestehen. Den Oberflächen von Metallen kann beispielsweise durch Polieren, die Eigenschaften für eine niedrige Reibung verliehen werden. Bevorzugt sind Stempel enthaltend zumindest an den verformungswirksamen Oberflächen Polytetrafluorethylen (Teflon). Die Schicht niedriger Reibung kann auch zwei oder mehrere der beispielhaft genannten Kunststoffe in Mischung oder einen oder mehrere der Kunststoffe im Gemisch mit zusätzlichen in verteilter Form vorliegenden Hartstoffen, wie Gläser in Kugelform, aufweisen. Anstelle der Kunststoffe können andere Werkstoffe als Schicht mit niedriger Reibung in Frage kommen. Dies sind beispielsweise Metalle, wie Aluminium oder Chromstahl, insbesondere auch mit polierten Oberflächen. Weitere Oberflächenschichten mit niedriger Reibung, wie keramische Schichten oder graphit-, bornitrid- oder molybdändisulfidhaltige Schichten sind anwendbar.

Als Metall-Kunststoff-Verbunde können beispielsweise Verbunde, enthaltend eine Metallfolie in einer Dicke von 8 µm bis 150 µm und bevorzugt 20 bis 80 µm, angewendet werden. Die Folie kann aus z.B. Stahl, Eisen, Kupfer und bevorzugt aus Aluminium sein. Mitumfasst sind auch Metallfolien aus Legierungen, enthaltend im überwiegendem Masse eines der genannten Metalle. Bevorzugte Folien aus Aluminium können beispielsweise aus Aluminium einer Reinheit von wenigstens 98,0 %, zweckmässig 98,3 %, vorteilhaft 98,5 und insbesondere 98,6 % sein, wobei der Rest auf 100 % die begleitenden Verunreinigungen darstellen. Im weiteren können beispielsweise Aluminiumfolien des Typs AlFeSi oder des Typs AlFe-SiMn angewendet werden.

Als Kunststoffe können beispielsweise Schichten, Folien oder Folienverbunde, wobei die Folien und Folienverbunde auch orientiert, resp. axial oder biaxial verstreckt, sein können, aus thermoplastischen Kunststoffen der Reihen der Polyolefine, der Polyamide, der Polyester, des Polyvinylchlorids und weiterer angewendet werden.

Typische Beispiele von thermoplastischen Kunststoffen sind aus der Reihe der Polyolefine sind Polyethylene, wie MDPE, HDPE, uni- und biaxial verstreckte Polyethylene, Polypropylene, wie cast-Polypropylen und uni- oder biaxial verstreckte Polypropylene, oder aus der Reihe der Polyester das Polyethylenterephthalat.

Die Schichtdicke der thermoplastischen Kunststoffe als Schicht, Folie oder Folienverbund in den Metall-Kunststoff-Verbunden kann beispielsweise 12 bis 100 µm und bevorzugt 20 bis 60 µm betragen.

Die Metallfolien und thermoplastischen Kunststoffe können z.B. durch Kaschieren, Kalandrieren oder Extrusionskaschieren zu Verbunden gefügt werden. Zu Verbinden der Schichten können fallweise Kaschierkleber und Haftvermittler angewendet werden und die zu verbindenden Oberflächen können durch Plasma-, Korona- oder Flammvorbehandlung modifiziert werden.

Beispiele von Metall-Kunststoff-Verbunden sind Verbunde mit einer ersten Schicht, beispielsweise einer Folie oder einem Folienverbund aus den genannten thermoplastischen Kunststoffen, einer zweiten Schicht, in Form einer Metallfolie und einer auf der freien Seite der Metallfolie angebrachten dritten Schicht, einer Siegelschicht aus einem Polyolefin, wie Polyethylen oder Polypropylen oder aus PVC.

Weitere anwendbare Metall-Kunststoff-Verbunde können eine erste Schicht, beispielsweise eine Folie oder einen Folienverbund aus den genannten thermoplastischen Kunststoffen, einer zweiten Schicht in Form einer Metallfolie und einer dritten Schicht, beispielsweise einer Folie oder Folienverbund oder eine extrudierte Schicht, aus den genannten thermoplastischen Kunststoffen aufweisen. Weitere Schichten, wie Siegelschichten können vorgesehen werden.

Die Metall-Kunststoff-Verbunde können auf wenigstens einer seiner Aussenseiten oder auf beiden Aussenseiten eine Siegelschicht, in Form einer siegelbaren Folie oder eines Siegellackes aufweisen. Die Siegelschicht ist bestimmungsgemäss in äusserster Lage innerhalb des Verbundaufbaues angeordnet. Insbesondere kann eine Siegelschicht auf einer Aussenseite des Verbundes vorgesehen sein, wobei diese Siegelschicht bei der Formpackung gegen die Inhalts- resp. Schulterseite gerichtet sein soll, um das Ansiegeln einer Deckelfolie oder dergl. zu ermöglichen.

Typische Beispiele aus der Praxis von Metall-Kunststoff-Verbunden sind:
oPA 25 / Al 45 / PVC 60,
oPA 25 / Al 45 / oPA 25,
Al 120 / PP 50,
oPA 25 / Al 60 / PE 50,
oPA 25 / Al 60 PP 60,
oPA 25 / Al 45 / PVC 100,
oPA 25 / Al 60 / PVC 60,
oPA 25 / Al 45 *l* PE-beschichtet,
oPA 25 / Al 45 / oPA 25,
oPA 25 / Al 60 / PVC 100,
oPA 25 / Al 60 / oPA 25 / EAA 50,
PVC 60/oPA 25/Al 60/PVC 60
PVC 60/oPA 15/Al 45/oPA 15/PVC 60
PVC 60/oPA 25/Al 45/oPA 25/PVC 60
oPA 25/Al 60/oPVC 30
oPA 25/Al 60/oPVC 60
oPET 25/Al 60/oPVC 30
oPA 25/Al 60/oPET 25
oPET 25/Al 60/oPET 25
wobei "o" jeweils für "orientiert", PA für Polyamid, PVC für Polyvinylchlorid, PE für Polyethylen, PP für Polypropylen, PET für Polyethylenterephthalat, EAA für Ethylenacrylsäure und Al für Aluminium steht und die Ziffern für die Schicht-, resp. Foliendicke in µm stehen.

Vorliegende Erfindung betrifft auch die Vorrichtung zur Durchführung des erfindungsgemässen Verfahrens, wobei die Matrizen und die Niederhalter einander gegenüberliegende Randbereiche aufweisen, die den Verbund klemmend und unverstreckbar zwischen dem Matrizenrand und dem Niederhalterand festgelegt und Stempel, die den Verbund über die Schultern der Matrize in Gesenköffnungen, die sich innerhalb eines Schulterbereiches in der Matrize befinden, ziehen, wobei die Oberfläche des Schulterbereiches gegenüber dem Randbereich der Matrize 0,01 bis 10 mm tiefer liegt und der Verbund über die Oberfläche des Schulterbereiches gleitend oder fliessend gezogen und/oder gestreckt wird.

Zweckmässig ist eine Vorrichtung zur Durchführung des Verfahrens, bei welcher die Oberfläche des Schulterbereiches der Matrize 0,1 bis 2,0 mm, vorzugsweise 0,15 bis 0,3 mm, tiefer liegt als die Oberfläche des Randbereiches der Matrize.

Bevorzugt ist eine Vorrichtung zur Durchführung des Verfahrens, bei welcher die Schulterbereiche der Matrize ganz oder teilweise mit einer Oberflächenschicht niedriger Reibung, jeweils mit einem Reibungskoeffizienten von 0,05 bis 2,1, bedeckt sind.

Im Rahmen vorliegender Erfindung ist die Verwendung der erfindungsgemässen kaltverformten Formpackung als Behältnis zur vereinzelten Aufnahme von stückförmigen Füllgütern in den Vertiefungen. Beispiele sind die Aufnahme von z.B. einer, zwei oder drei Tabletten, Dragees, Pillen, Ampullen etc. in jeder Vertiefung einer Formpackung, wie einer Blister- oder Durchdrückpackung.

Zur Verwendung der kaltverformten Formpackung gehört die vereinzelte Aufnahme von stückförmigen Füllgütern in Form von Tabletten, Dragees, Pillen, Kapseln, oder Ampullen mit einem maximalen Durchmesser von 5 mm bis 20 mm, bevorzugt 7 bis 10 mm und einer maximalen Höhe von 1,5 mm bis 10 mm, zweckmässig von 3 mm bis 5 mm.

Das erfindungsgemässe Verfahren kann demnach zur Herstellung von kaltverformten Formpackungen, wie Bodenteilen und Deckelteilen von Blisterpackungen für Pharmazeutika, Nahrungs- und Genussmittel, technische Artikel, für Boden- und Deckelteile von halbstarren und starren Verpackungen, für Umhüllungen usw. aus einem Metall-Kunststoff-Verbund verwendet werden.

Beim Thermoformen von Kunststoff-Filmen, wie z.B. PVC, zu Blisterpackungen, werden hohe Seitenwandsteigungen erzielt. Solche Seitenwandsteigungen an den Vertiefungen von Formpackungen, wie Blisterpackungen, aus metallfolienhaltigen Laminaten konnten bis anhin nicht erzielt werden. Dies bedeutet, dass im Verhältnis zum Füllgut viel zu grosse Packungen eingesetzt werden mussten. Mit vorliegendem Verfahren werden Formpackungen erreicht, welche die bisherigen Nachteile, wie die gegenüber den thermogeformten Kunststoffblistern geringe Seitenwandsteigung, nicht aufweisen. Es gelingt nach vorliegendem Verfahren Formpackungen herzustellen, die bezüglich der Packungsgrösse mit z.B. Kunststoffblistern zumindest vergleichbar sind. Damit kann die Verpackung attraktiver gestaltet und das ökologische Profil verbessert werden. Zudem kann die porenfreie Umformungstiefe verbessert werden.

Es können Tiefungsverhältnisse, d.h. das Verhältnis von Durchmesser der Vertiefung zu deren Tiefe, von beispielsweise 1,9 bis 5 oder vorzugsweise 2,1 bis 2,6 erzeugt werden. Der Durchmesser der Vertiefung, soweit es sich nicht um einen runden Querschnitt handelt, wird im Falle eines nicht kreisrunden Querschnittes, wie eines konvexen Querschnittes, z.B. elliptisch, oval, polygonal, rechteckig, trapezförmig, rhomboid usw., der grösste Durchmesser verstanden.

Die Anzahl von Vertiefungen jeden Bodenteiles ist unkritisch und kann beispielsweise eine, zwei oder mehr Vertiefungen enthalten. In der Pharmazie sind beispielsweise Packungen mit 6 bis 40 Vertiefungen gängig.

Mit Kaltverformung wird in vorliegendem Fall eine Verformung bei Temperaturen von beispielsweise 10 bis 35 °C und vorzugsweise 20 bis 30 °C, umfasst.

Die zu Formpackungen, wie Blisterpackungen und insbesondere Bodenteilen von Blisterpackungen, verarbeiteten Verbunde bleiben porenfrei auch bei grossen Tiefungsverhältnissen und auch die Ausschussrate bei der Umformung vermindert sich erheblich.

Die Figuren 1 bis 10 erläutern die vorliegende Erfindung beispielhaft näher.

Die Figur 1 zeigt eine Vorrichtung zur Herstellung von kaltverformten Blisterpackungen nach dem Stand der Technik schematisch im Schnitt.

Die Figuren 2 und 3 zeigen eine erfindungsgemässe Vorrichtung in den nacheinanderfolgenden zwei Verfahrensstufen schematisch im Schnitt.

Die Figur 4 stellt die Draufsicht auf eine Matrize für die Vorrichtung nach vorliegender Erfindung dar.

Die Figur 5 stellt die Draufsicht auf einen Niederhalter für die Vorrichtung nach vorliegender Erfindung dar.

Die Figur 6 zeigt schematisch einen Verfahrensablauf nach vorliegender Erfindung.

Die Figuren 7 und 8 zeigen eine Variante der erfindungsgemässen Vorrichtung in den nacheinanderfolgenden zwei Verfahrensstufen schematisch im Schnitt.

Figur 9 zeigt einen Schnitt durch einen Stempelkörper beispielsweise zur Vorverformung im ersten Schritt.

Figur 10 zeigt eine Ausführungsform eines bevorzugten zweiten Stempels zur Endverformung.

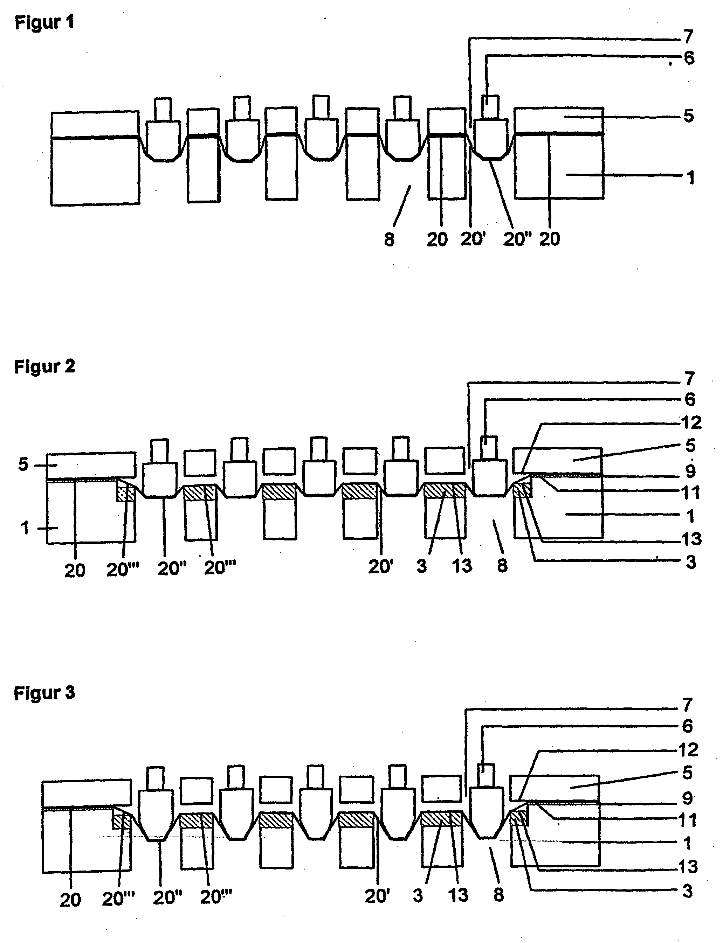

In Figur 1 ist eine Vorrichtung nach dem Stand der Technik, aus einer Matrize 1, einem Niederhalter 5 und einem Stempel 6. In vorliegendem Fall weist der Stempel einen Träger (nicht gezeigt) und daran befestigt eine Anzahl Stempelkörper 6 auf. Die Anzahl der Stempelkörper entspricht der Anzahl der Gesenköffnungen in der Matrize 1. Der Stempel, resp. die einzelnen Stempelkörper 6, durchdringen die Öffnungen 7 im Niederhalter. Zwischen der Matrize 1 und dem Niederhalter 5 wird ein Metall-Kunststoff-Verbund 20 eingelegt. Durch Druckbeaufschlagung wird der Niederhalter 5 gegen die Matrize 1 gepresst, wobei der Metall-Kunststoff-Verbund 20 an allen Druckstellen zwischen Matrize 1 und Niederhalter 5 im wesentlichen unverstreckbar festliegt. Die Stempelkörper 6 senken sich unter Krafteinwirkung durch die Öffnungen 7 im Niederhalter, stossen auf den Metall-Kunststoff-Verbund 20" und unter Verformung des Metall-Kunststoff-Verbundes 20' senken sich die Stempelkörper 6 durch die Gesenköffnungen 8 in der Matrize, bis der gewünschte Verformungsgrad des Metall-Kunststoff-Verbundes erreicht ist.

Der Metall-Kunststoff-Verbund wird sowohl im Randbereich als auch im Schulterbereich 13 zwischen Niederhalter 5 und Matrize 1 im wesentlichen unverstreckbar festgelegt und die Verformung des Verbundes erfolgt lediglich innerhalb des die Gesenköffnung 8 überdeckenden Metall-Kunststoff-Verbundes.

In Figuren 2 und 3 wird das erfindungsgemässe Verfahren in zweistufiger Ausführung gezeigt, wobei die Vorrichtung im Schnitt dargestellt ist. Es sind die Matrize 1, der Niederhalter 5 und der Stempel (Stempelkörper) 6. Der Niederhalter 5 weist einen Randbereich 12 auf. Auch die Matrize 1 weist einen Randbereich 11 auf. Im Randbereich 11 der Matrize 1 ist ein Rauhigkeitsmuster 9 angebracht. Bezogen auf die Höhe des Randbereiches 11 der Matrize 1, ist der ganze Schulterbereich 13, d.h. der Bereich der Matrize 1, der sich innerhalb des Randbereiches 11 befindet und der die Schultern bildet, welche die Gesenköffnungen umgeben, tiefer liegend angeordnet.

Im Schulterbereich 13 der Matrize 1 ist eine Schicht 3 angeordnet. Die Schicht 3 ist in Figuren 2 und 3 schraffiert eingezeichnet. Die Schicht 3 ist eine Schicht aus einem Werkstoff mit niedriger Reibung, aus beispielsweise Polytetrafluorethylen, Polyoxymethylen, Polyolefinen oder Polyethlyenterephthalat usw. Die Schicht 3 erstreckt sich vorteilhaft über den ganzen Schulterbereich 13 der Matrize 1. Eine Schicht 3 die nur Teile des Schulterbereiches 13 bedeckt ist fallweise möglich.

In der erfindungsgemässen Vorrichtung wird ein Metall-Kunststoff-Verbund 20 verformt. Der Metall-Kunststoff-Verbund 20 kann als Endlosmaterial von einer Vorratsrolle oder als Bogen in die Vorrichtung eingeführt werden. Die Teilbereiche des Metall-Kunststoff-Verbundes 20, die unterschiedlichen Verformungsgradienten unterliegen, sind mit 20', 20" und 20''' bezeichnet. Der Metall-Kunststoff-Verbund 20 wird zwischen dem Niederhalter 5 und der Matrize 1 und dabei insbesondere im Randbereich 11 der Matrize 1, der vom Randbereich 12 des Niederhalters überdeckt wird, klemmend und unverstreckbar festgelegt. Die Stempelkörper 6 senken sich unter Krafteinwirkung durch die Öffnungen 7 im Niederhalter, stossen auf den Metall-Kunststoff-Verbund 20". Unter Verformung des Metall-Kunststoff-Verbundes senken sich die Stempelkörper 6 durch die Gesenköffnungen 8 in der Matrize, bis der gewünschte Verformungsgrad des Metall-Kunststoff-Verbundes erreicht ist. Der Metall-Kunststoff-Verbund 20''' kann im ganzen Schulterbereich 13, d.h. entlang den Randbereichen und den Schultern zwischen den Gesenköffnungen 8, im Masse der Absenkung des Stempels 6 in die Gesenköffnungen 8, fliessen und unter Verstreckung verformt werden. Zusätzlich wird der Metall-Kunststoff-Verbund 20' zwischen Schulterbereich und Stempelkörper 6 unter Verstreckung verformt. Die Stempelkörper 6 weisen eine Oberfläche niedriger Reibung auf und sind im Querschnitt vorteilhaft zylinder- oder tonnenförmig gestaltet. D.h. der Rand oder die Kante zwischen Stempelboden und Stempelseitenwand weist einen kleinen Radius auf und die Stempelseitenwand steht in steilem Winkel oder senkrecht zum Stempelboden. Die Verformung wird z.B. bis zu 100% der endgültigen Tiefe der Vertiefung durchgeführt.

In Figur 3 ist der zweite Schritt des erfindungsgemässen Verfahrens dargestellt. Bezüglich der Matrize 1, Niederhalter 5, den Öffnungen 7 und 8, dem Rauigkeitsmuster 9, dem Randbereich 11, dem Randbereich 12 und dem Schulterbereich 13 besteht kein wesentlicher vorrichtungsbezogener Unterschied zur ersten Verfahrensstufe. In der zweiten Verfahrensstufe werden unter weiterer Verformung des Metall-Kunststoff-Verbundes 20 andere Stempelkörper 6 in die Gesenköffnungen 8 der Matrize abgesenkt, bis der gewünschte Verformungsgrad des Metall-Kunststoff-Verbundes erreicht ist. Der Metall-Kunststoff-Verbund 20''' kann weiter im ganzen Schulterbereich 13, d.h. entlang den Randbereichen und den Schultern zwischen den Gesenköffnungen 8, im Masse der Absenkung der Stempelkörper 6 in die Gesenköffnungen 8, fliessen und unter Verstreckung verformt werden. Auch der Metall-Kunststoff-Verbund 20' zwischen Schulterbereich und Stempelkörper 6 wird unter weiterer Verstreckung verformt. Für den zweiten Verformungsschritt wird beispielhaft ein Stempel mit Stempelkörpem 6 mit einem kegelstumpfförmigem Querschnitt angewendet. Die verformungswirksame Oberfläche der Stempelkörper 6 weist eine niedrige Reibung auf. Dadurch kann der Metall-Kunststoff-Verbund 20" auch im Bereich der verformungswirksamen Oberfläche der Stempelkörper 6 fliessen. Die Verformung wird z.B. bis zu mindestens 100% der endgültigen Tiefe der Vertiefung durchgeführt.

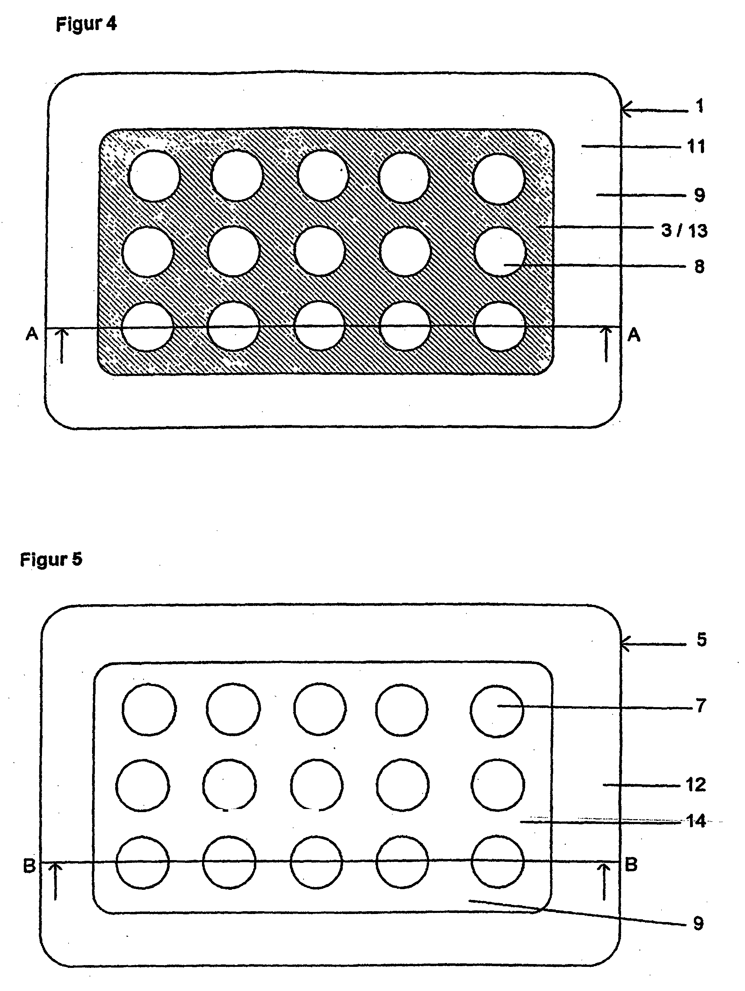

Die Figur 4, eine Draufsicht auf eine Matrize 1, zeigt den Randbereich 11 und den Schulterbereich 13. Der Randbereich 11 kann ein Rauhigkeitsmuster 9 aufweisen. Der Schulterbereich 13 liegt gegenüber dem Randbereich 11 um 0,01 bis 10 mm tiefer. Der Schulterbereich 13, ist in vorteilhafter Ausführungsform teil- und insbesondere vollflächig mit dem beschriebenen Belag oder Schicht 3 niedriger Reibung abgedeckt. Im Schulterbereich 13 sind beispielhaft in regelmässiger Anordnung die Gesenköffnungen 8 eingezeichnet. Es handelt sich in der Regel um Bohrungen, d.h. Öffnungen oder Ausnehmungen runden Querschnittes oder aber auch um Öffnungen ovalen Querschnittes. Auch Öffnungen polygonalen Querschnittes, wie z.B. rechteckige, quadratische oder sechseckige Öffnungen, sind ohne weiteres zu verwirklichen.

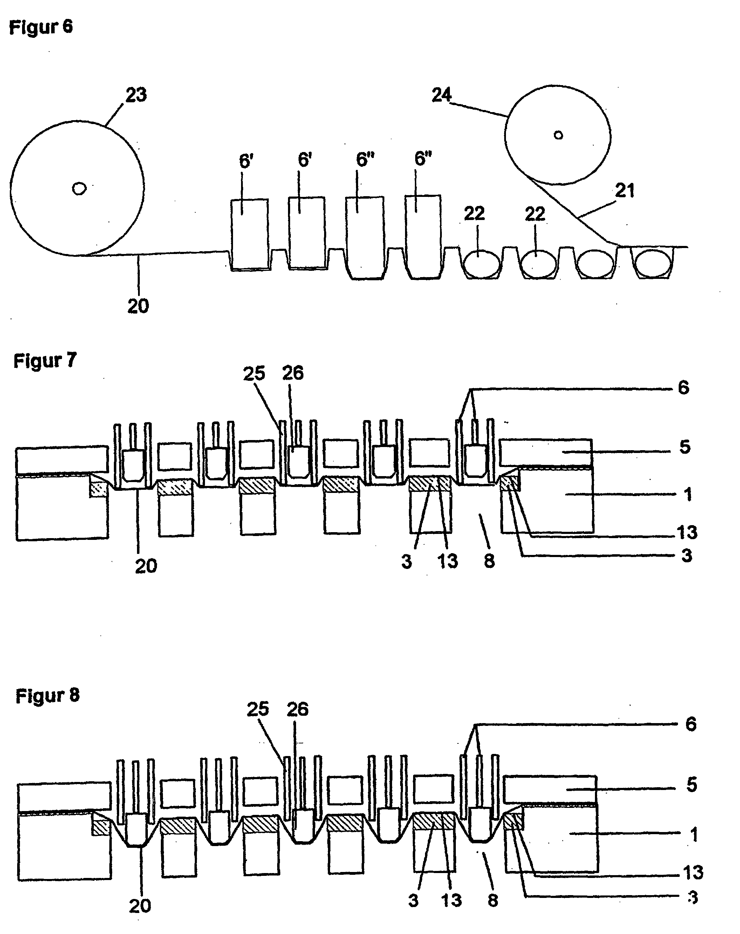

In Figur 5 ist ein Niederhalter 5 in der Draufsicht abgebildet. Die gegen die Matrize und den beim Herstellungsprozess dazwischen zu liegen kommenden Verbund gerichtete Oberfläche 14 des Niederhalters 5 kann plan sein. Über die Berührungsflächen, die sich durch den Randbereich 12 des Niederhalters 5 und den Randbereich 11 der Matrize 1 ausbilden, wird in Arbeitsstellung der Verbund in der Weise festgeklemmt, dass der Verbund nicht fliessen oder sich verstrecken kann. Der Niederhalter 5 kann anstelle der planen Oberfläche auch einen Randbereich 12 und einen innerhalb des Randbereiches liegenden vertieften Bereich aufweisen oder der Niederhalter kann im wesentlichen nur aus dem Randbereich bestehen, d.h. einen Ring darstellen.

Im Randbereich 12 des Niederhalters 5 kann ein teil- oder vollflächiges Rauhigkeitsmuster angeordnet sein. Anstatt oder in Kombination mit einem Rauhigkeitsmuster können am Niederhalter Leisten aus einem elastischen Material, wie Gummi etc., angeordnet sein, wobei diese Leisten die Klemmwirkung verstärken. Der Randbereich des Niederhalters 5 ist zweckmässig gegengleich zum Randbereich 11 der Matrize 1 aneordnet und beide Randbereiche 11, 12 haben im wesentlichen die gleichen Abmessungen.

Der Niederhalter 5 weist eine Mehrzahl von Öffnungen 7 oder Ausnehmungen, in vorliegendem Falle Bohrungen, auf. Die Bohrungen 7 werden vom Stempel, resp. von Stempelkörpern durchdrungen und entsprechend sind die Bohrungen in gleicher Lage und Anordnung und zumindest annähernd gleicher Grösse wie.die Gesenköffnungen 8 in der Matrize 1.

Die Linien A-A in Figur 4 und B-B in Figur 5 deuten die Stelle des in den Figuren 2 und 3 gezeigten Querschnittes durch die Matrize 1 und Niederhalter 5 an.

In Figur 6 ist das vorliegende Verfahren vereinfacht schematisch dargestellt. Ein Metall-Kunststoff-Verbund 20 wird von einer Rolle 23 abgerollt und einem ersten Stempel mit Stempelkörpern 6' und anschliessend einem zweiten Stempel mit Stempelkörpern 6" zugeführt. Dem Metall-Kunststoff-Verbund 20 werden dabei in zwei Stufen die Vertiefungen eingeformt und es entstehen die Formpackungen. Anschliessend werden die Formpackungen mit den Inhaltstoffen 22 befüllt. Danach kann kontinuierlich durch aufsiegeln oder dergl. eine Deckelfolie 21, die von einer Vorratsrolle 24 abgerollt wird, auf den Formpackungen angebracht werden. Die endlosen Formpackungen lassen sich dann zu den gewünschten Packungsgrössen ablängen.

In Figuren 7 und 8 wird eine weitere Variante des erfindungsgemässen Verfahrens in zweistufiger Ausführung gezeigt, wobei die Vorrichtung im Schnitt A-A bzw. B-B dargestellt ist. Es sind die Matrize 1, der Niederhalter 5 und der Stempel 6. Weitere Einzelheiten und deren Bezeichnungen lassen sich entsprechend den Figuren 2 und 3 entnehmen. Im Schulterbereich 13 der Matrize 1 ist eine Schicht 3 angeordnet. Die Schicht 3 ist in Figuren 7 und 8 schraffiert eingezeichnet. Die Schicht 3 ist die Schicht aus einem Werkstoff mit niedriger Reibung, wie aus Figuren 2 und 3 bekannt. In der Figur 7 ist ein erster Verfahrensschritt gezeigt. Der Metall-Kunststoff-Verbund 20 wird durch die Stempel 6 verformt. Die Stempel 6 stellen eine bauliche Einheit dar und sind beispielhaft zweiteilig ausgeführt. Ein hohlzylinderförmiger Stempel 25, mit -- in der Draufsicht -- Ringform und einer verformungswirksamen Oberfläche niedriger Reibung, wird abgesenkt und es erfolgt eine Vorverformung des Metall-Kunststoff-Verbundes 20. Gemäss Figur 8 erfolgt die Endverformung des Metall-Kunststoff-Verbundes 20 in einem zweiten Schritt. Als Teil des Stempels 6 gleitet teleskopisch im Stempel 25 ein zylindrischer Stempel 26. Der Stempel 25 hat gemäss Figur 7 seine Endposition erreicht und verbleibt in der abgesenkten Lage. Der Stempel 26 gleitet teleskopartig aus dem Stempel 26 heraus und wird über den Stempel 25 hinaus abgesenkt. Dabei verformt der Stempel 26 mit seiner verformungswirksamen Oberfläche niedriger Reibung den Metall-Kunststoff-Verbund 20 vorteilhaft bis über 100% der angestrebten Verformungstiefe.

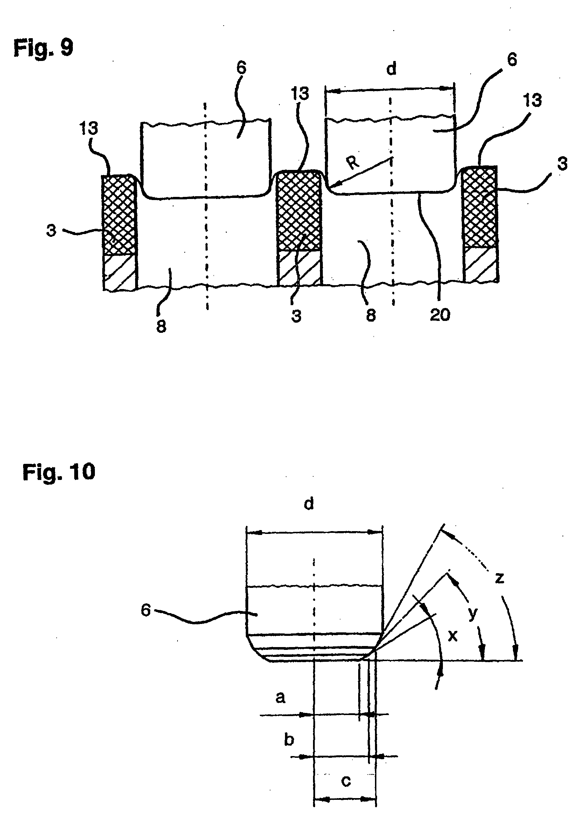

Die Figur 9 zeigt einen Stempel 6, resp. zwei Stempelkörper 6, die gemeinsam an einer nicht gezeigten Halterplatte festgelegt sein können. Zwischen Stempelboden und Stempelseitenwand ist eine Kante mit einem Kantenradius R angeordnet. Der Stempel 6 weist einen Durchmesser d auf. Der Durchmesser d ist beispielsweise 3 bis 30% geringer als der Durchmesser der Gesenköffnung 8. Der Metall-Kunststoff-Verbund 20 stützt sich und gleitet während dem Umformen über die Schulterbereiche 13. Stempel 6 gezeigter Form eignen sich bevorzugt für das Vorverformen, als auch das Endverformen.

In Figur 10 ist ein Stempel 6 in einer für die Endverformung bevorzugten Ausführungsform dargestellt. Zwischen Stempelboden und Stempelseitenwand ist der Übergang durch einengraduell gestuften Kantenradius gekennzeichnet. Die Tangenten an die einzelnen Stufen können beispielsweise mit dem Stempelboden Winkel x, y und z von beispielsweise 30° bis 75° einschliessen. Der Radius a kann beispielsweise wenigstens 60 % von d/2 sein, wobei d den Stempeldurchmesser darstellt. Entsprechend sind die Radien b und c grösser als a und kleiner als d/2.

In vorliegend bildlich dargestellter Ausführungsform wird eine verhältnismässig kleine Matrize gezeigt. Es ist auch möglich Matrizen nach vorliegender Erfindung zu gestalten, deren Schulterbereich durch Quer- und /oder Längsstege unterteilt ist. Im Bereich dieser Stege wird der Metall-Kunststoff-Verbund vom Niederhalter klemmend festgehalten. Damit gelingt es beispielsweise mit einer Matrize und mit einem Stempelhub eine Mehrzahl von Formpackungen zu erzeugen. Nach der Verformung können die gleichzeitig gefertigten Formpackungen z.B. durch Trennschnitte entlang den Stegbereichen aufgeteilt werden.

Speziell geeignet ist das beanspruchte Verfahren für Füllkörper flacher Form. Die Füllkörper können in Form von Tabletten, Dragees, Pillen, Kapseln, Ampullen etc. vorliegen. Ein Vorteil ist vor allem darin zu sehen, dass durch das erfindungsgemässe Verfahren auch grössere Steigungen in den Seitenwandungen der Vertiefungen möglich sind. Dies führt zu verbesserten Tiefungsverhältnissen und somit zu kleineren Packungen im Verhältnis zum Füllgut. Berechnungen für einen zylinderförmigen Füllkörper mit einem Durchmesser von ca. 9 mm und einer Höhe von ca. 3,5 mm haben ergeben, dass mit dem erfindungsgemässen Verfahren die Formpackungen in ihrer Grösse um ca. 32% kleiner gestaltet werden können.

## Patentansprüche

1. Verfahren zum Herstellen von kaltverformten Formpackungen mit wenigstens einer Vertiefung, aus einem Metall-Kunststoff-Verbund, wobei der Verbund zwischen einem Niederhalter und einer Matrize festgehalten wird und die Matrize wenigstens eine Gesenköffnung aufweist und in die Gesenköffnungen der Matrize ein Stempel vorgetrieben und dabei der Verbund zu der Formpackung mit einer oder mehreren Vertiefungen verformt wird, die Matrize und der Niederhalter einen einander gegenüberliegenden Randbereich aufweisen und die Matrize innerhalb des Randbereiches einen Schulterbereich, welcher die Gesenköffnung oder die Gesenköffnungen umgibt, aufweist und die Oberfläche des Schulterbereiches tiefer liegt als die Oberfläche des Randbereiches der Matrize wobei
ein erster Stempel (6) oder erste Stempel mit einer verformungswirksamen Oberfläche mit einer Reibung von minimal 0,05 und maximal 2,1 den Metall-Kunststoff-Verbund in einem ersten Schritt bis zu 100 % der endgültigen Tiefe der Vertiefungen vorverformen und anschliessend mit dem oder den ersten Stempeln oder einem zweiten Stempel (6) oder zweiten Stempeln (6) eine verformungswirksame Oberfläche mit einer Reibung von minimal 0,05 und maximal 2,1 besitzen, der vorverformte Metall-Kunststoff-Verbund in einem zweiten Schritt bis zu wenigstens 100 % der endgültigen Tiefe der Vertiefungen endverformt wird **dadurch gekennzeichnet, dass** der ersten Stempel zwischen Stempelboden und Stempelseiten wand einen Kantenradius R von 0,1 mm bis 5,0 mm hat und der zweiten Stempel zwischen Stempelboden und Stempelseitenwand einen mehrstufigen, kegelformig ausgebildeten übergang hat.

2. Verfahren zur Herstellung von kaltverformten Formpackungen nach Anspruch 1, **dadurch gekennzeichnet, dass** für den ersten und den zweiten Schritt derselbe Stempel (6) oder dieselben Stempel (6) verwendet wird.

3. Verfahren zur Herstellung von kaltverformten Formpackungen nach Anspruch 1, **dadurch gekennzeichnet, dass** beim Verformen der oder die ersten Stempel (6) und der oder die zweiten Stempel (6) mit verformungswirksamen Oberflächen gleicher Reibung ausgestattet sind.

4. Verfahren zur Herstellung von kaltverformten Formpackungen nach Anspruch 1, **dadurch gekennzeichnet, dass** der erste Stempel (6) oder erste Stempel (6) im ersten Schritt oder den ersten Schritten zur Vorverformung bis 90 %, zweckmässig bis zu 70 % und vorteilhaft bis zu 50 % der endgültigen Tiefe der Vertiefungen vorgetrieben werden und anschliessend im zweiten Schritt der oder die ersten Stempel (6) oder ein zweiter Stempel (6) oder zweite Stempel (6) zur Endverformung auf 100 % bis 115 % und vorteilhaft auf 103 % bis 110 % der endgültigen Tiefe der Vertiefungen vorgetrieben werden.

5. Verfahren zur Herstellung von kaltverformten Formpackungen nach Anspruch 1, **dadurch gekennzeichnet, dass** der oder die Stempel (6) für den ersten Schritt zwischen Stempelboden und Stempelseitenwand einen Kantenradius R von 0,5 mm bis 1,5 mm, aufweisen.

6. Verfahren zur Herstellung von kaltverformten Formpackungen nach Anspruch 1, **dadurch gekennzeichnet, dass** mittels einer Matrize 1 und einem Niederhalter (5) der Verbund (20) festgelegt wird und mittels zwei oder mehrerer ineinander teleskopisch gleitender Stempel (6), die nacheinander in die Gesenköffnungen (8) einer Matrize (1) abgesenkt werden, der Verbund (20) verformt wird.

7. Verfahren zur Herstellung von kaltverformten Formpackungen nach Anspruch 6, **dadurch gekennzeichnet, dass** ein erster Stempel (25) in Ringform abgesenkt wird und in der Matrize (1) eine Vorverformung des Verbundmaterials (20) bewirkt und der erste Stempel (25) in seiner Vorverformungsposition belassen wird und ein zweiter zylinderförmiger Stempel (26), der teleskopisch im ersten ringförmigen Stempel (25) gleitet, anschliessend abgesenkt wird und die Endverformung des Verbundmaterials (20) bewirkt.

8. Verfahren zur Herstellung von kaltverformten Formpackungen nach Anspruch 1, **dadurch gekennzeichnet, dass** mittels einer Matrize (1) und einem Niederhalter (5) der Verbund (20) festgelegt wird und ein erster und ein zweiter Stempel (6) nacheinander in die Gesenköffnungen (8) einer Matrize (1) abgesenkt und wieder angehoben werden und der Verbund (20) vor- und endverformt wird und vorzugsweise die Stempel (6) mit unterschiedlichen Stempelgeometrien ausgestattet sind.

9. Verfahren zur Herstellung von kaltverformten Formpackungen nach Anspruch 1, **dadurch gekennzeichnet, dass** zwei Matrizen (1) mit ihren Niederhaltern (5) nacheinander angeordnet sind und jede der Matrizen (1) einen Stempel (6) zugeordnet hat und der Verbund (20) taktweise von der ersten Matrize (1) zu der zweiten Matrize (1) verschoben wird und der Verbund (20) in der ersten Matrize (1) vorverformt und der vorverformte Verbund (20) auf die zweite Matrize verschoben und in der zweiten Matrize endverformt wird.

10. Verfahren zur Herstellung von kaltverformten Formpackungen nach Anspruch 1, **dadurch gekennzeichnet, dass** mehrere Matrizen, insbesondere mehr als zwei Matrizen, mit ihren Niederhaltern (5) nacheinander angeordnet sind und jede der Matrizen (1) einen Stempel (6) zugeordnet hat und der Verbund (20) taktweise von der ersten Matrize (1) zu einer nächstfolgenden Matrize verschoben wird und der Verbund (20) im ersten Schritt wenigstens in einer Matrize (1) vorverformt und der vorverformte Verbund (20) auf die nächstfolgende Matrize verschoben und im zweiten Schritt in wenigstens einer weiteren Matrize endverformt wird.

11. Vorrichtung zum Herstellen von kaltverformten Formpackungen mit wenigstens einer Vertiefung, aus einem Metall-Kunststoff-Verbund (20), wobei der Verbund (20) zwischen einem Niederhalter (5) und einer Matrize (1) festgehalten wird und die Matrize (1) wenigstens eine Gesenköffnung (8) aufweist und in die Gesenköffnungen (8) der Matrize (1), in einem oder mehreren Schritten, Stempel (6) mit einer verformungswirksamen Oberfläche niedriger Reibung vorgetrieben werden und dabei der Verbund (20) zu der Formpackung mit einer oder mehreren Vertiefungen verformt wird, wobei die Matrize (1) und die Niederhalter (5) einander gegenüberliegende Randbereiche (11,12) aufweisen, die den Verbund (20) klemmend und unverstreckbar zwischen dem Matrizenrand (11) und dem Niederhalterand (12) festlegen und einem ersten Stempel (6) oder ersten Stempeln (6), die den Metall-Kunststoff-Verbund in einem oder mehreren Schritten bis zu 100 % der endgültigen Tiefe der Vertiefungen vorverformen und dem zweiten Stempel (6) oder Stempeln (6), die den vorverformten Verbund (20) in einem oder mehreren Schritten bis zu wenigstens 100 % der endgültigen Tiefe der Vertiefungen verformen, und den Verbund (20) dabei über die Schultern (13) der Matrize (1) in Gesenköffnungen (8), die sich innerhalb eines Schulterbereiches (11) in der Matrize (1) befinden, ziehen, wobei die Oberfläche (3) des Schulterbereiches (13) gegenüber dem Randbereich (11) der Matrize (1) um 0,01 bis 10 mm tiefer liegt und der Verbund (20) über die Oberfläche (3) des Schulterbereiches (13) gleitend oder fliessend gezogen und/oder gestreckt wird wobei der erste oder die ersten Stempel (6) und der zweite oder die zweiten Stempel (6) eine verformungswirksame Oberfläche mit einer Reibung von 0,3 bis 2,1 aufweisen **dadurch gekennzeichnet, dass** der oder die ersten Stempel für den ersten Verformungsschritt mit einem Kantenradius R zwischen Stempelboden und Stempelseitenwand von 0,3 mm bis 1,5 mm und der oder die zweiten Stempel für den zweiten Verformungsschritt einen mehrstufigen kegel- oder kegelstumpfförmig ausgebildeten Übergang von Stempelseitenwand zu Stempelboden aufweisen.

12. Vorrichtung zur Durchführung des Verfahrens nach Anspruch 11, **dadurch gekennzeichnet, dass** der oder die ersten Stempel für den ersten Verformungsschritt einen Kantenradius R zwischen Stempelboden und Stempelseitenwand von 0,5 mm bis 1,2 mm, aufweisen.

13. Vorrichtung zur Durchführung des Verfahrens nach Anspruch 11, **dadurch gekennzeichnet, dass** die verformungswirksamen Oberfläche des oder der Stempel (6) mit niedriger Reibung Polyoxymethylen, Polyethylen oder Polyethylenterephthalat und insbesondere Polytetrafluorethylen enthält oder daraus besteht.

14. Verwendung der kaltverformten Formpackung hergestellt nach dem Verfahren gemäss Anspruch 1 als Behältnis zur vereinzelten Aufnahme von stückförmigen Füllgütern, in den Vertiefungen, vorzugsweise in Form von Tabletten, Dragées, Pillen, Kapseln, oder Ampullen mit einem maximalen Durchmesser von 5 mm bis 20 mm, bevorzugt 7 bis 10 mm und einer maximalen Höhe von 1,5 mm bis 10 mm, zweckmässig von 3 mm bis 5 mm.

## Claims

1. Process for the production of cold-formed packages with at least one recess from a metal/plastic composite, in which the composite is held between a clamping device and a die, the die has at least one opening, a punch is driven into the openings in the die and the composite is thus formed into the shaped package with one or more recesses, the die and the clamping device have opposing edge regions, the die is provided within the edge region with a shoulder region which surrounds the opening or openings and the surface of the shoulder region is lower than the surface of the edge region of the die, a first punch (6) or first punches with a forming surface displaying friction of a minimum of 0.05 and a maximum of 2.1 pre-form/s the metal/plastic composite in a first step to 100 % of the final depth of the recesses and then finally the pre-formed metal/plastic composite is formed in a second step to at least 100 % of the final depth of the recesses by means of the first punch or punches or a second punch (6) or second punches (6) with a forming surface displaying friction of a minimum of 0.05 and a maximum of 2.1, **characterised in that** the first punch has an edge radius R of 0.1 mm to 5.0 mm between the bottom of the punch and the side wall of the punch and the second stamp has a multi-stage conical transition from the bottom of the punch to the side wall of the punch.

2. Process for the production of cold-formed packages according to claim 1, **characterised in that** the same punch (6) or the same punches (6) is/are used for the first and the second steps.

3. Process for the production of cold-formed packages according to claim 1, **characterised in that** the first punch or punches (6) and the second punch or punches (6) are provided with forming surfaces displaying the same degree of friction for forming.

4. Process for the production of cold-formed packages according to claim 1, **characterised in that** the first punch (6) or first punches (6) is/are driven in the first step or first steps to 90 %, expediently 70 % and advantageously 50 % of the final depth of the recesses for pre-forming and then, in the second step, the first punch or punches (6) or a second punch (6) or second punches (6) is/are driven to 100 % to 115 % and advantageously 103 % to 110 % of the final depth of the recesses for final forming.

5. Process for the production of cold-formed packages according to claim 1, **characterised in that** the punch or punches (6) for the first step has/have an edge radius R of 0.5 mm to 1.5 mm between the bottom of the punch and the side wall of the punch.

6. Process for the production of cold-formed packages according to claim 1, **characterised in that** the composite (20) is fixed by means of a die 1 and a clamping device (5) and is formed by means of two or more punches (6) sliding telescopically one into the other and lowered one after the other into the openings (8) in a die (1).

7. Process for the production of cold-formed packages according to claim 6, **characterised in that** a first punch (25) of annular shape is lowered, the composite material (20) is pre-formed in the die (1), the first punch (25) is left in its pre-forming position and a second cylindrical punch (26) which slides telescopically in the first annular punch (25) is then lowered and carries out the final forming of the composite material (20).

8. Process for the production of cold-formed packages according to claim 1, **characterised in that** the composite (20) is fixed by means of a die (1) and a clamping device (5) and pre-forming and final forming of the composite (20) are carried out by means of first and second punches (6) which are lowered one after the other into the openings (8) in a die (1) and then raised again, and the punches (6) are preferably provided with different geometry.

9. Process for the production of cold-formed packages according to claim 1, **characterised in that** two dies (1) and their associated clamping devices (5) are arranged one after the other, each of the dies (1) has an associated punch (6), the composite (20) is moved in time from the first die (1) to the second die (1), the composite (20) is pre-formed in the first die (1), the pre-formed composite (20) is advanced to the second die and final forming is carried out in the second die.

10. Process for the production of cold-formed packages according to claim 1, **characterised in that** a plurality of dies, in particular more than two dies, and their associated clamping devices (5) are arranged one after the other, each of the dies (1) has an associated punch (6), the composite (20) is moved in time from the first die (1) to a subsequent die, the composite (20) is pre-formed in the first step at least in one die (1), the pre-formed composite (20) is advanced to the subsequent die and final forming is carried out in the second step in at least one further die.

11. Device for the production of cold-formed packages with at least one recess from a metal/plastic composite (20), in which the composite (20) is held between a clamping device (5) and a die (1), the die (1) has at least one opening (8), punches (6) with low-friction forming surfaces are driven into the openings (8) in the die (1) in one or more steps and the composite (20) is thus formed into the shaped package with one or more recesses, the die (1) and the clamping devices (5) have opposing edge regions (11, 12) which clamp the composite (20) between the edge (11) of the die and the edge (12) of the clamping device in such a manner that it cannot be stretched, a first punch (6) or first punches (6) pre-form/s the metal/plastic composite in one or more steps to 100 % of the final depth of the recesses and the second punch (6) or punches (6) form/s the pre-formed composite (20) in one or more steps to at least 100 % of the final depth of the recesses and thus draw/s the composite (20) over the shoulders (13) of the die (1) into openings (8) situated within a shoulder region (11) in the die (1), the surface (3) of the shoulder region (13) being 0.01 to 10 mm lower than the edge region (11) of the die (1) and the composite (20) being drawn and/or stretched in a sliding or flowing manner over the surface (3) of the shoulder region (13) and the first punch or the first punches (6) and the second punch or the second punches (6) having forming surfaces displaying friction of 0.3 to 2.1, **characterised in that** the first punch or punches for the first forming step has/have an edge radius R of 0.3 mm to 1.5 mm between the bottom of the punch and the side wall of the punch and the second punch or punches for the second forming step has/have a multi-stage conical or truncated cone-shaped transition from the side wall of the punch to the bottom of the punch.

12. Device for carrying out the process according to claim 11, **characterised in that** the first punch or punches for the first forming step has/have an edge radius R of 0.5 mm to 1.2 mm between the bottom of the punch and the side wall of the punch.

13. Device for carrying out the process according to claim 11, **characterised in that** the low-friction forming surface of the punch or punches (6) contains or consists of polyoxymethylene, polyethylene or polyethylene terephthalate and, in particular, polytetrafluoroethylene.

14. Use of the cold-formed package produced by the process according to claim 1 as a container for accommodating individual products in the recesses, preferably in the form of tablets, sugar-coated tablets, pills, capsules or ampoules with a maximum diameter of 5 mm to 20 mm, preferably 7 to 10 mm, and a maximum height of 1.5 mm to 10 mm, advantageously 3 mm to 5 mm.

## Revendications

1. Procédé de fabrication d'emballages formés à froid comprenant au moins une cavité, constitués d'une composition de métal et de matière plastique, moyennant quoi la composition est maintenue entre un serre-flan et une matrice et la matrice présente au moins un orifice de matriçage et un poinçon est enfoncé dans les orifices de matriçage de la matrice et ainsi la composition est formée pour obtenir l'emballage comprenant une ou plusieurs cavité(s), la matrice et le serre-flan présentent une zone de délimitation opposée l'une à l'autre et la matrice présente à l'intérieur de la zone de délimitation une zone d'épaulement, laquelle entoure l'orifice de matriçage ou les orifices de matriçage, et la surface de la zone d'épaulement est située plus profondément que la surface de la zone de délimitation de la matrice, moyennant quoi
un premier poinçon (6) ou des premiers poinçons présentant une surface active dans le formage d'une adhérence comprise entre 0,05 minimum et 2,1 maximum préforment la composition de métal et de matière plastique lors d'une première étape jusqu'à 100% de la profondeur définitive des cavités, et ensuite avec le ou les premier(s) poinçon(s) ou un second poinçon (6) ou les seconds poinçons (6), qui présente(nt) une surface active dans le formage d'une adhérence comprise entre 0,05 minimum et 2,1 maximum, la composition de métal et de matière plastique préformée prend sa forme définitive lors d'une seconde étape jusqu'à au moins 100% de la profondeur définitive des cavités,
**caractérisé en ce que** le premier poinçon présente entre le fond de poinçon et la paroi latérale de poinçon un rayon d'arête R compris entre 0,1 mm et 5,0 mm et le second poinçon présente un passage sphérique à plusieurs étages entre le fond de poinçon et la paroi latérale de poinçon.

2. Procédé de fabrication d'emballages formés à froid selon la revendication 1, **caractérisé en ce que** le même poinçon (6) ou les mêmes poinçons (6) est/sont utilisé(s) pour la première et la seconde étape.

3. Procédé de fabrication d'emballages formés à froid selon la revendication 1, **caractérisé en ce que** lors du formage, le ou les premier(s) poinçon(s) (6) et le ou les second(s) poinçon(s) (6) sont munis de surfaces actives dans le formage présentant une adhérence identique.

4. Procédé de fabrication d'emballages formés à froid selon la revendication 1, **caractérisé en ce que** le premier poinçon (6) ou les premiers poinçons (6) est/sont enfoncé(s) lors de la première étape ou des premières étapes en vue du préformage jusqu'à 90%, de manière appropriée jusqu'à 70% et de manière avantageuse jusqu'à 50% de la profondeur définitive des cavités, et ensuite lors de la seconde étape, le ou les premier(s) poinçon(s) ( 6 ) ou un second poinçon ( 6 ) ou des seconds poinçons (6) est/sont enfoncé(s) en vue du formage définitif jusqu'à 100% à 115% et de manière avantageuse jusqu'à 103% à 110% de la profondeur définitive des cavités.

5. Procédé de fabrication d'emballages formés à froid selon la revendication 1, **caractérisé en ce que** le ou les poinçon(s) (6) pour la première étape présentent entre le fond de poinçon et la paroi latérale de poinçon un rayon d'arête R compris entre 0,5 mm et 1,5 mm.

6. Procédé de fabrication d'emballages formés à froid selon la revendication 1, **caractérisé en ce que** la composition (20) est fixée au moyen d'une matrice (1) et d'un serre-flan (5), et la composition (20) est formée au moyen de deux poinçons (6) ou plus glissant les uns dans les autres de manière télescopique, qui sont abaissés les uns après les autres dans les orifices de matriçage (8) d'une matrice (1).

7. Procédé de fabrication d'emballages formés à froid selon la revendication 6, **caractérisé en ce qu'**un premier poinçon (25) annulaire est abaissé et un préformage du matériau composé (20) s'effectue dans la matrice (1) et le premier poinçon (25) est laissé dans sa position de préformage et un second poinçon (26) cylindrique, qui glisse de manière télescopique dans le premier poinçon (25) annulaire, est ensuite abaissé, et le formage définitif du matériau composé (20) s'effectue.

8. Procédé de fabrication d'emballages formés à froid selon la revendication 1, **caractérisé en ce que** la composition (20) est fixée au moyen d'une matrice (1) et d'un serre-flan (5), et un premier et un second poinçons (6) sont abaissés et relevés l'un après l'autre dans les orifices de matriçage (8) d'une matrice (1) et la composition (20) prend son préformage et son formage définitif et les poinçons (6) sont munis de préférence de géométries de poinçon différentes.

9. Procédé de fabrication d'emballages formés à froid selon la revendication 1, **caractérisé en ce que** deux matrices (1) sont disposées avec leurs serre-flans (5) l'une derrière l'autre et chacune des matrices (1) est associée à un poinçon (6), et la composition (20) est déplacée en cadence depuis la première matrice (1) vers la seconde matrice (1) et la composition (20) est préformée dans la première matrice (1) et la composition (20) préformée est déplacée sur la seconde matrice et prend son formage définitif dans la seconde matrice.

10. Procédé de fabrication d'emballages formés à froid selon la revendication 1, **caractérisé en ce que** plusieurs matrices, en particulier plus de deux matrices, sont disposées avec leurs serre-flans (5) les unes derrière les autres et chacune des matrices (1) est associée à un poinçon (6) et la composition (20) est déplacée en cadence depuis la première matrice (1) vers une matrice suivante et la composition (20) est préformée lors d'une première étape dans une matrice (1) et la composition (20) préformée est déplacée sur la matrice suivante et lors de la seconde étape prend son formage définitif dans au moins une autre matrice.

11. Dispositif de fabrication d'emballages formés à froid comprenant au moins une cavité, constitués d'une composition de métal et de matière plastique (20), moyennant quoi la composition (20) est maintenue entre un serre-flan (5) et une matrice (1) et la matrice (1) présente au moins un orifice de matriçage (8) et les poinçons (6) présentant une surface active dans le formage de faible adhérence sont enfoncés dans les orifices de matriçage (8) de la matrice (1), en une ou plusieurs étapes, et ainsi la composition (20) est formée pour obtenir l'emballage comprenant une ou plusieurs cavité(s), moyennant quoi la matrice (1) et le serre-flan (5) présentent des zones de délimitation (11, 12) opposées l'une à l'autre, qui fixent la composition (20) par serrage et de manière à ce qu'elle ne puisse pas être étirée entre le bord de matrice (11) et le bord de serre-flan (12), et comprenant un premier poinçon (6) ou des premiers poinçons (6), qui préforment la composition de métal et de matière plastique en une ou plusieurs étapes jusqu'à 100% de la profondeur définitive des cavités et comprenant le second poinçon (6) ou les poinçons (6), qui forment la composition (20) préformée en une ou plusieurs étapes jusqu'à au moins 100% de la profondeur définitive des cavités, qui étirent la composition (20) ainsi par l'intermédiaire des épaulements (13) de la matrice (1) dans les orifices de matriçage (8), qui sont situés à l'intérieur d'une zone d'épaulement (11) dans la matrice (1), moyennant quoi la surface (3) de la zone d'épaulement (13) est située de 0,01 à 10 mm plus profondément par rapport à la zone de délimitation (11) de la matrice (1) et la composition (20) et emboutie et/ou étirée sur la surface (3) de la zone d'épaulement (13) en glissant ou en coulant, moyennant quoi le premier ou les premiers poinçon(s) (6) et le second ou les seconds poinçon(s) (6) présentent une surface active dans le formage d'une adhérence comprise entre 0,3 et 2,1, **caractérisé en ce que** le ou les premier(s) poinçon(s) pour la première étape de formage présente(nt) un rayon d'arête R entre le fond de poinçon et la paroi latérale de poinçon compris entre 0,3 mm et 1,5 mm et le ou les second(s) poinçon(s) pour la seconde étape de formage présente(nt) un passage conçu étagé sphérique ou tronconique depuis la paroi latérale de poinçon vers le fond de poinçon.

12. Dispositif de réalisation du procédé selon la revendication 11, **caractérisé en ce que** le ou les premier(s) poinçon(s) pour la première étape de formage présente(nt) un rayon d'arête R compris entre 0,5 mm et 1,2 mm entre le fond de poinçon et la paroi latérale de poinçon.

13. Dispositif de réalisation du procédé selon la revendication 11, **caractérisé en ce que** la surface active dans le façonnage du ou des poinçon(s) (6) présentant une faible adhérence contient ou se compose de polyoxyméthylènes, de polyéthylènes ou de poyléthylènetéréphtalates et en particulier de polytétrafluoréthylènes.

14. Utilisation de l'emballage formé à froid fabriqué d'après le procédé selon la revendication 1 comme récipient pour le logement individuel de produits de remplissage en morceaux, dans les cavités, de préférence sous la forme de comprimés, de dragées, de pilules, de capsules, ou d'ampoules présentant un diamètre maximal compris entre 5 mm et 20 mm, de préférence entre 7 et 10 mm et d'une hauteur maximale comprise entre 1,5 mm et 10 mm, de manière appropriée entre 3 mm et 5 mm.
